# EUROPEAN PATENT APPLICATION

(11) **EP 2 836 042 A1**
(43) Date of publication of application: **11.02.2015**
(21) Application number: 13306139.0
(22) Date of filing: 08.08.2013
(51) Int. Cl.: H04W 72/04

(54) **Wireless telecommunications network nodes and corresponding methods**

(71) Applicant: ALCATEL LUCENT, 92100 Boulogne-Billancourt (FR)
(72) Inventor: Brend, Graham, Swindon, Wiltshire SN5 7DJ (GB); Puddle, Nicola, Swindon, Wiltshire SN5 7DJ (GB); Wong, Shin Horng, Swindon, Wiltshire SN5 7DJ (GB)
(74) Representative: Leppard, Andrew John

(57) **Abstract**

Wireless telecommunications network nodes, methods and computer program products are disclosed. A base station method comprises: receiving at least one resource control message from a small cell base station to control uplink resources used by a user equipment for uplink transmissions with a small cell supported by the small cell base station; determining a time delay experienced between the resource control message being sent by the small cell base station and being received by the base station; and transmitting an indication of the time delay to the small cell base station. In this way, any delay or latency experienced by the resource control message when transiting from the small cell base station to the base station can be measured and indicated to the small cell base station in order to help the small cell base station determine whether or not ameliorative action is required. This helps to ensure that the small cell base station can take the appropriate action, if required, to ensure that such resource control messages are received in time to enable the user equipment to be correctly allocated uplink resources.

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

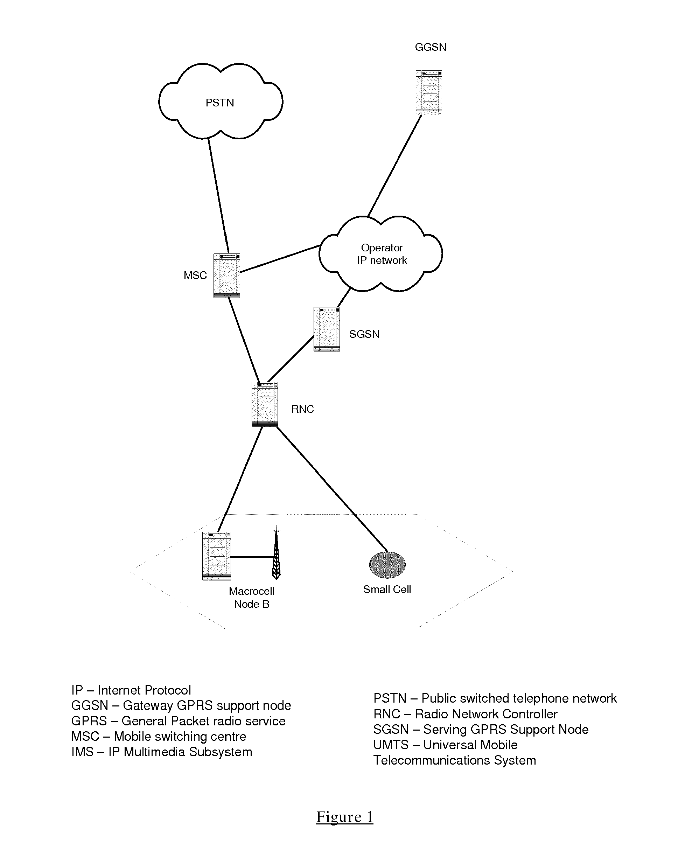

Traditional base stations provide coverage in relatively large geographical areas and those cells are often referred to as macro cells. It is possible to provide a heterogeneous network (HetNet) where smaller-sized cells are provided within macro cells, as illustrated in Figure 1. Such smaller sized cells are sometimes referred to as low-power nodes (LPN), micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

### SUMMARY

According to a first aspect, there is provided a base station method, comprising: receiving at least one resource control message from a small cell base station to control uplink resources used by a user equipment for uplink transmissions with a small cell supported by the small cell base station; determining a time delay experienced between the resource control message being sent by the small cell base station and being received by the base station; and transmitting an indication of the time delay to the small cell base station.

The first aspect recognises that a key consideration with HetNet deployments is how to successfully integrate macro & small cells without each causing issues for the other, or for user equipment within the HetNet. For example, a significant issue to consider is that the macro cells will be transmitting at a considerably higher power than small cells that might be located within the macro cell's coverage area. Thus the resulting difference in transmit power between the macro & small cells will result in an interference environment for user equipment that is different from that experienced in networks with solely macro cells deployed and can cause issues for user equipment as they roam through the HetNet. Such interference issues are exacerbated when the small cells are deployed using the same frequency as the macro cells (co-channel deployment).

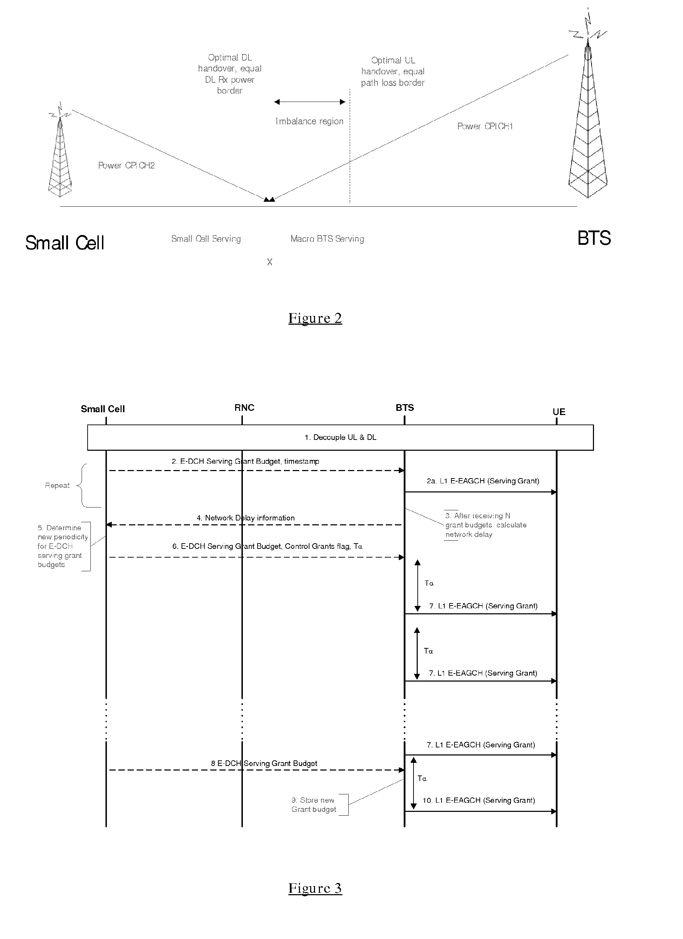

In particular, one of the main issues with co-channel interference is that a downlinkuplink (DL-UL) imbalance can be experienced by user equipment at various points in the HetNet since the UL signal received from a user equipment at each node is not dependent on the DL transmit power of the nodes, as illustrated in Figure 2. For example at the optimal UL handover border the user equipment path loss to the base station and small cell is the same, so from an UL point of view would be the place where the user equipment's serving cell should be changed from the base station to the small cell. However because the DL transmit powers of the nodes are not equal the DL signal received from the base station by the user equipment at this border is stronger than that from the small cell, so from this point of view the user equipment's serving cell should not be changed to the small cell.

Similarly at the optimal DL handover border the common pilot channel (CPICH) receive power of the pilot signals transmitted by the base station & small cell is the same. Hence, from a DL point of view, the user equipment's serving cell should be changed from the small cell to the base station. However the user equipment path loss to the base station is much greater than to the small cell, i.e. the signal received from the user equipment at the base station and small cell is not the same, so from an UL point of view the user equipment's serving cell should not be changed from the small cell to the base station.

These inequalities thus result in a region between these two borders where there is an imbalance in the UL & DL for a user equipment within that region.

In order to help mitigate the DL-UL imbalance issue a number of different approaches may be considered, some of these approaches can be impacted by the architecture of the deployed network and hence any such impacts need to be mitigated.

One approach to handle the UL-DL imbalance issues caused by HetNet deployments in UMTS networks provides for the uplink and downlink resources for user equipment being decoupled, whereby the user equipment's uplink and downlink streams are managed by different cells. For example, the downlink is managed by the user equipment's serving macro cell whilst the uplink is managed by a small cell. In this approach the small cell is given responsibility for allocating Enhanced Dedicated Channel (E-DCH) grants to user equipment. This information is either sent directly from the small cell to the user equipment when the user equipment is Release-12 compliant or from the small cell via the macro network to the user equipment when the user equipment is not compliant with Release-12 (a legacy user equipment). The solution outlined for handling legacy user equipment involves the small cell indirectly sending grant information to the user equipment through the macro network, i.e. from the small cell to the macro radio network controller (RNC) and then on to the user equipment via a macro base station.

However, because the grant information is sent from the small cell to the user equipment via the macro network, there is an inherent delay introduced. This is not ideal since the delay introduced can mean that by the time the grant information is received by the user equipment, the conditions that determined how the grant allocation was calculated are out of date and the grant allocated to the user equipment is not suitable for the conditions it is experiencing.

In addition, this approach adds to the amount of traffic that the network has to handle, since normally the UL grant information needs to be sent to the user equipment periodically and frequently.

Accordingly, a base station method may be provided. The method may comprise the step of receiving one or more resource control messages from a base station, such as, for example, a small cell base station to control uplink resources used by user equipment for uplink transmissions with a cell such as, for example, a small cell supported by that small cell base station. The method may also comprise the step of determining a time delay or latency experienced between the control message being sent by the small cell base station and it being received by the base station. The method may also comprise the step of transmitting an indication of the time delay to the small cell base station. In this way, any delay or latency experienced by the resource control message when transiting from the small cell base station to the base station can be measured and indicated to the small cell base station in order to help the small cell base station determine whether or not ameliorative action is required. This helps to ensure that the small cell base station can take the appropriate action, if required, to ensure that such resource control messages are received in time to enable the user equipment to be correctly allocated uplink resources.

In one embodiment, the step of determining comprises determining the time delay from a plurality of the resource control messages. Accordingly, the time delay for more than one message may be determined in order to provide a representative time delay.

In one embodiment, the step of determining comprises determining at least one of an average time delay, a minimum time delay and a maximum time delay from the plurality of the resource control messages and the step of transmitting comprises transmitting an indication at least one of the average time delay, the minimum time delay and the maximum time delay to the small cell base station. It will be appreciated that any statistical evaluation of the delay associated with the messages may be calculated and transmitted to the small cell base station.

In one embodiment, the step of determining comprises determining the time delay from a time stamp associated with each resource control message. The timestamp may be, for example, a universal time indicator used by all nodes within the network.

In one embodiment, the method comprises the steps of: receiving resource control information associated with the user equipment from the small cell base station; utilising the resource control information to determine allocated uplink resources to be used by the user equipment for uplink transmissions with the small cell; and transmitting an indication of the allocated uplink resources to the user equipment. Accordingly, information may be provided to the base station which enables the base station to determine what uplink resources to allocate to the user equipment, the base station then transmits this to the user equipment itself.

In one embodiment, the resource control information comprises an indication of small cell base station resource availability, user equipment characteristics and an interval between transmissions of the indication of the allocated uplink resources and the step of transmitting comprises transmitting the indication of the allocated uplink resources to the user equipment in accordance with the interval. Accordingly, the base station may also be advised of a time period or interval that should elapse between each indication of allocated uplink resources being transmitted to the user equipment.

In one embodiment, the method comprises the steps of: receiving resource control information associated with each of a plurality of user equipment; utilising the resource control information to determine allocated uplink resources to be used by each user equipment for uplink transmissions with the small cell; and transmitting an indication of the allocated uplink resources to each user equipment. Accordingly, the base station may calculate the uplink resource allocation for more than one user equipment which has an uplink with that small cell.

In one embodiment, the resource control information comprises, for each user equipment, at least one of an indication of relative apportionment of uplink resources and an interval between transmissions of the indication of the allocated uplink resources. Accordingly, the base station may allocate the resources based on a relative apportionment between the user equipment which is indicated by the small cell base station.

In one embodiment, the method comprises the steps of: receiving resource control information associated with a group of user equipment; utilising the resource control information to determine allocated uplink resources to be used by the group of user equipment for uplink transmissions with the small cell; and transmitting an indication of the allocated uplink resources to each of the group of user equipment. Accordingly, the resource control information may be for a group of user equipment and the base station may then allocate uplink resources to be used by that group of user equipment based on the resource control information.

In one embodiment, the resource control information comprises at least one of an indication of allocated uplink resources for each user equipment and an indication of a time interval between transmissions of the indication of the allocated uplink resources and the method comprises transmitting the indication of the allocated uplink resources to the user equipment in accordance with the interval. Accordingly, the base station may be provided with an indication of the actual uplink resources to be allocated for each user equipment, and this may also include a time interval between the transmissions of those indications. The base station may then simply transmit that indication to each user equipment at the specified time interval.

In one embodiment, the resource control information comprises at least one of an indication of a change in allocated uplink resources for each user equipment and an indication of a change in time interval between transmissions of the indication of the allocated uplink resources and the method comprises transmitting the indication of the allocated uplink resources to the user equipment in accordance with the interval. Accordingly, should a change in the allocation occur, then this maybe signalled to the base station and the base station may then transmit the updated allocation at each time interval.

In one embodiment, the resource control message comprises an indication to stop transmitting the indication of the allocated uplink resources to at least one user equipment.

According to a second aspect, there is provided a base station, comprising: reception logic operable to receive at least one resource control message from a small cell base station to control uplink resources used by a user equipment for uplink transmissions with a small cell supported by the small cell base station; determining logic operable to determine a time delay experienced between the resource control message being sent by the small cell base station and being received by the base station; and transmission logic operable to transmit an indication of the time delay to the small cell base station.

In one embodiment, the determining logic is operable to determine the time delay from a plurality of the resource control messages.

In one embodiment, the determining logic is operable to determine at least one of an average time delay, a minimum time delay and a maximum time delay from the plurality of the resource control messages and the transmission logic is operable to transmit an indication at least one of the average time delay, the minimum time delay and the maximum time delay to the small cell base station.

In one embodiment, the determining logic is operable to determine the time delay from a time stamp associated with each resource control message.

In one embodiment, the reception logic operable is to receive resource control information associated with the user equipment from the small cell base station, the determining logic is operable to utilise the resource control information to determine allocated uplink resources to be used by the user equipment for uplink transmissions with the small cell; and the transmission logic is operable to transmit an indication of the allocated uplink resources to the user equipment.

In one embodiment, the resource control information comprises an indication of small cell base station resource availability, user equipment characteristics and an interval between transmissions of the indication of the allocated uplink resources and the transmission logic is operable to transmit the indication of the allocated uplink resources to the user equipment in accordance with the interval.

In one embodiment, the reception logic operable is to receive resource control information associated with each of a plurality of user equipment; the determining logic is operable to utilise the resource control information to determine allocated uplink resources to be used by each user equipment for uplink transmissions with the small cell; and the transmission logic is operable to transmit an indication of the allocated uplink resources to each user equipment.

In one embodiment, the resource control information comprises, for each user equipment, at least one of an indication of relative apportionment of uplink resources and an interval between transmissions of the indication of the allocated uplink resources.

In one embodiment, the reception logic operable is to receive resource control information associated with a group of user equipment; the determining logic is operable to utilise the resource control information to determine allocated uplink resources to be used by the group of user equipment for uplink transmissions with the small cell; and the transmission logic is operable to transmit an indication of the allocated uplink resources to each of the group of user equipment.

In one embodiment, the resource control information comprises at least one of an indication of allocated uplink resources for each user equipment and an indication of a time interval between transmissions of the indication of the allocated uplink resources and the transmission logic is operable to transmit the indication of the allocated uplink resources to the user equipment in accordance with the interval.

In one embodiment, the resource control information comprises at least one of an indication of a change in allocated uplink resources for each user equipment and an indication of a change in time interval between transmissions of the indication of the allocated uplink resources and the transmission logic is operable to transmit the indication of the allocated uplink resources to the user equipment in accordance with the interval.

In one embodiment, the resource control message comprises an indication to stop transmitting the indication of the allocated uplink resources to at least one user equipment.

According to a fourth aspect, there is provided a small cell base station method, comprising: transmitting at least one resource control message to a base station to control uplink resources used by a user equipment for uplink transmissions with a small cell supported by the small cell base station; and receiving an indication of a time delay experienced between the resource control message being sent by the small cell base station and being received by the base station.

In one embodiment, the method comprises the step of associating a time stamp with each resource control message.

In one embodiment, the indication of a time delay comprises at least one of an average time delay, a minimum time delay and a maximum time delay.

In one embodiment, the method comprises the step of transmitting resource control information associated with the user equipment to the base station.

In one embodiment, the step of transmitting resource control information comprises transmitting resource control information associated with the user equipment to the base station when the time delay exceeds a threshold amount.

In one embodiment, the step of transmitting resource control information comprises transmitting resource control information associated with the user equipment to the base station when a mobility of the user equipment fails to achieve a threshold amount.

In one embodiment, the resource control information comprises an indication of small cell base station resource availability, user equipment characteristics and an interval between transmissions of the indication of the allocated uplink resources.

In one embodiment, the step of transmitting comprises the step of transmitting resource control information associated with each of a plurality of user equipment to the base station.

In one embodiment, the resource control information comprises, for each user equipment, at least one of an indication of relative apportionment of uplink resources and an interval between transmissions of the indication of the allocated uplink resources.

In one embodiment, the step of transmitting comprises transmitting resource control information associated with a group of user equipment.

In one embodiment, the resource control information comprises at least one of an indication of allocated uplink resources for each user equipment and an indication of a time interval between transmissions of the indication of the allocated uplink resources.

In one embodiment, the resource control information comprises at least one of an indication of a change in allocated uplink resources for each user equipment and an indication of a change in time interval between transmissions of the indication of the allocated uplink resources.

In one embodiment, the method comprises the step of preventing transmission of at least one resource control message. It will be appreciated that this will occur typically when mobility of the user equipment is judged or estimated to be high.

In one embodiment, the method comprises the step of initiating handover of control of uplink transmissions to the base station.

In one embodiment, the resource control message comprises an indication to stop transmitting the indication of the allocated uplink resources to at least one user equipment.

According to a fourth aspect there is provided a small cell base station, comprising: transmission logic operable to transmit at least one resource control message to a base station to control uplink resources used by a user equipment for uplink transmissions with a small cell supported by the small cell base station; and reception logic operable to receive an indication of a time delay experienced between the resource control message being sent by the small cell base station and being received by the base station.

In one embodiment, the transmission logic is operable to associate a time stamp with each resource control message.

In one embodiment, the indication of a time delay comprises at least one of an average time delay, a minimum time delay and a maximum time delay.

In one embodiment, the transmission logic is operable to transmit resource control information associated with the user equipment to the base station.

In one embodiment, the transmission logic is operable to transmit resource control information associated with the user equipment to the base station when the time delay exceeds a threshold amount.

In one embodiment, the transmission logic is operable to transmit resource control information associated with the user equipment to the base station when a mobility of the user equipment fails to achieve a threshold amount.

In one embodiment, the resource control information comprises an indication of small cell base station resource availability, user equipment characteristics and an interval between transmissions of the indication of the allocated uplink resources.

In one embodiment, the transmission logic is operable to transmit resource control information associated with each of a plurality of user equipment to the base station.

In one embodiment, the resource control information comprises, for each user equipment, at least one of an indication of relative apportionment of uplink resources and an interval between transmissions of the indication of the allocated uplink resources.

In one embodiment, the transmission logic is operable to transmit resource control information associated with a group of user equipment.

In one embodiment, the resource control information comprises at least one of an indication of allocated uplink resources for each user equipment and an indication of a time interval between transmissions of the indication of the allocated uplink resources.

In one embodiment, the resource control information comprises at least one of an indication of a change in allocated uplink resources for each user equipment and an indication of a change in time interval between transmissions of the indication of the allocated uplink resources.

In one embodiment, the transmission logic is operable to prevent transmission of at least one resource control message.

In one embodiment, the transmission logic is operable to initiate handover of control of uplink transmissions to the base station.

In one embodiment, the resource control message comprises an indication to stop transmitting the indication of the allocated uplink resources to at least one user equipment.

According to a fifth aspect, there is provided a computer program product operable, when executed on a computer, to perform the method steps of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates a simple HetNet;
Figure 2 illustrates an imbalance zone; and
Figure 3 illustrates messaging between network nodes according to one embodiment.

### DESCRIPTION OF THE EMBODIMENTS

### Overview

Before discussing the embodiments in any more detail, first an overview will be provided. Embodiments recognize that for some user equipment it is necessary to route the messages used for the allocation of resources for uplink transmissions via the network and that this may cause an undue delay, leading to poor performance. In particular, some heterogeneous networks, in order to mitigate the uplink-downlink imbalance experienced by user equipment, decouple the uplink and downlink for user equipment such that the macro cell base station to which the user equipment is "anchored", served or supported is not responsible for determining the uplink budget allocation for the user equipment. Instead, a small cell that is a member of the user equipment active set is given this responsibility.

For Release 12 compliant user equipment, the small cell can only provide the E-DCH grant directly to the user equipment. However, for pre-Release 12 (legacy) user equipment, this information has to be provided via the macro cell base station to which the user equipment is anchored since a small cell cannot, in this case, increase the grant to the user equipment, but can only decrease it. In addition, for Release 12-compliant user equipment, there may be scenarios where the user equipment's uplink signal to the small cell is sufficient for the small cell to decode the user equipment's uplink transport channel, but the quality of the downlink signal from the small cell is not sufficient to carry the E-DCH serving grant to the user equipment without error. In this case, the small cell will also need to use the macro cell base station to "carry" the E-DCH serving grant to the user equipment, until the downlink signal from the small cell to the user equipment improves so that the small cell can send the grant directly to the user equipment.

However, embodiments recognize that sending the E-DCH serving grant information from the small cell to the user equipment via the macro network introduces delay, typically due to the time taken to transport the information via the different network nodes. Typically, this can take between around 50 and 200 ms. However, there are also scenarios where the network delay is much longer, depending on the network architecture of the deployed base stations. In that case, the user equipment is either provided with a "late" E-DCH grant, which arrives at the user equipment after the point that the user equipment wished to transmit in the uplink, or the grant provided by the network is out of date, as the calculation upon which the small cell determines the E-DCH serving grant for the user equipment is now not relevant to the conditions being experienced by the user equipment. The network delay from any one small cell to different macro base stations can also vary, depending on where each base station is located in relation to the small cell.

Accordingly, embodiments introduce functionality on a small cell and a macro base station that can be used when the uplink and downlink are decoupled for a user equipment to mitigate the issues faced when dealing with inherent network delay. Embodiments introduce functionality on the macro base station that, under certain circumstances, provides the macro base station with partial responsibility for controlling when E-DCH grants are issued to the relevant user equipment. In particular, when uplink-downlink decoupling is triggered, the small cell base station that sends E-DCH grants to the macro network includes some time stamping information with the E-DCH serving grant budget. The time-stamping information will be the time (using a universally available reference) at which the small cell base station sent the E-DCH grant budget. Hence, the macro base station can then determine at what time the small cell sent the grant and therefore assess the delay introduced by the network.

After analysing the delay for 'N' (one or more) E-DCH grants, the macro base station then typically determines an average delay (TΔ) and the maximum (TΔmax) and the minimum (TΔmin) delays experienced; 'N' is a configured value and can be adapted by each operator based on their respective network deployment architectures. The macro base station then signals the delay information back to the small cell base station. The small cell base station is thus provided with feedback on the network delay measured by the macro base station.

With this knowledge of the network delay, the small cell base station can then decide how best to control the uplink grant for the user equipment and how frequently it needs to send the E-DCH serving grant budget to the macro base station. If the small cell base station determines that it does not need to send the E-DCH serving grant budget to the macro base station as frequently as it currently does, then it will notify the macro base station that the period between E-DCH serving grant budgets being issued to the user equipment via the macro base station will be reduced. This involves the small cell base station providing a "grant controlling" function to the macro base station, where the small cell base station typically sends a specific flag (the control grants flag) to the macro base station with the next E-DCH serving grant budget that the small cell base station sends. The macro base station will then use the provided budget to issue a serving grant to the relevant user equipment and will then subsequently assume control of the grant function for that user equipment. In other words, it will vary the grant for the user equipment appropriately, based on the information that the small cell base station provided to it. For example, the rate of increase/ decrease of the E-DCH serving grant that the macro base station previously observed when determining the network delay over 'N' E-DCH grants can be used to "seed" the macro base station's grant controlling function. Alternatively, the small cell base station can provide additional information to the macro base station together with the grant budget such as, for example, the rise over thermal and the rise over thermal target.

Alternatively, the small cell base station can determine that the grant information for the user equipment does not need to vary significantly. This may occur because, for example, the user equipment has low or no mobility or there is little contention for uplink resources since the number of user equipment attached to the particular cell is constant. The small cell base station can hence decide not to send E-DCH serving grants to the user equipment via the macro base station as frequently as it would normally. In which case, the small cell base station indicates to the macro base station that it should store the last received E-DCH serving grant budget for the user equipment and reissue it to the user equipment with a frequency Tα, as specified by the small cell. The frequency or periodicity is sent to the macro base station by the small cell base station at the same time as the flag that initiated this mode of operation.

Once the macro base station has been informed by the small cell base station to reissue the last received E-DCH serving grant to the user equipment, it will continue to do so every Tα, unless a new E-DCH serving grant budget received before the next grant is scheduled to be sent to the user equipment (when Tα expires again). If the macro base station receives a new E-DCH serving grant budget from the small cell within Tα, the macro base station will send the newly-received E-DCH serving grant to the user equipment and will update its internal E-DCH serving grant budget store with the new information.

The small cell base station may determine that the radio conditions experienced by the user equipment are changing rapidly (for example, if the user equipment is fast-moving) and also that the value of TΔ is too long, such that the calculated E-DCH serving grant budget may not be relevant to the user equipment by the time the user equipment receives the information. In this case, the small cell base station may decide that actually the macro base station would be better at allocating the E-DCH grant for the user equipment and, hence, the small cell base station may determine that it is necessary to recouple the uplink and downlink, and let the macro base station control both the user equipment's uplink and downlink resources. Alternatively, the small cell base station may decide that the speed of the user equipment is such that there is little point in issuing any E-DCH grants, as the user equipment may have transited through the uplink-downlink imbalance region quickly enough so that there is minimal impact on the user equipment not receiving the E-DCH grants when it is in the uplink-downlink imbalance region. The small cell base station may also be configured (for example, due to an operator defined policy) to limit the amount of network traffic it originates if it enters the uplink-downlink decoupling mode and that decoupling requires the small cell to send E-DCH serving grant budgets via the macro network. When this happens, the small cell base station may decide to reduce the frequency with which it sends E-DCH grants to the user equipment via the macro network and, hence, implement the mechanism by which the macro base station reissues previously received E-DCH grants to the relevant user equipment.

Due to the configuration of HetNets, it is entirely possible that there may be multiple user equipment that have their uplink decoupled to a small cell and their downlink decoupled to the same macro base station. Therefore, instead of sending multiple "grant controlling" functions and updates for each user equipment to the macro base station, the macro cell base station can instead send a group granting control function. For example, the small cell base station can send an uplink grant budget (for example, based on small cell rise over thermal) and a scheduling function (for example, a round-robin or other scheme) to the macro base station. The macro base station will then assume "control" of the grant for the relevant user equipment within the group and will therefore schedule the grant to each of these user equipment using such a function.

It will be appreciated that although the embodiments are described with reference to a universal mobile telephone system (UMTS network), this approach is also applicable to other network such as, for example, a long term evolution (LTE) network where the small cell allocates uplink resources such as uplink physical resource blocks, to the user equipment.

### Example operation

Figure 3 illustrates a simple UMTS HetNet arrangement which is composed of a small cell base station, a radio network controller (RNC) and a macro base station. A user equipment enters the uplink-downlink imbalance region between the small cell and the macro base station and, hence, the uplink and downlink are decoupled such that the small cell is responsible for providing uplink grants to the user equipment. Since this is a legacy (pre-release 12) user equipment, the small cell sends the uplink grants to the radio network controller which, in turn, sends them to the user equipment via the macro base station. In this example, the macro base station measures the network delay for transmissions between the small cell and the macro base station and indicates this back to the small cell base station. The small cell base station uses this to determine whether any ameliorative action is required. In this example, the small cell base station determines that it should reduce the periodicity of sending uplink grants to the user equipment and, hence, relies on the macro base station to reissue uplink grants to the user equipment on its behalf.

Accordingly, at step S1, the user equipment that is attached to the macro base station roams towards the small cell and, at a certain point, the uplink and downlink for the user equipment is decoupled, with the small cell base station being responsible for allocating E-DCH grants to the user equipment.

At step S2, the small cell base station sends N number of E-DCH serving grant budgets to the user equipment via the macro network. Each of these grants includes time-stamping information.

At step S3, after these N number of grant budgets have been received by the macro base station, the macro base station determines the average, maximum and minimum network delay experienced between the small cell base station and the macro base station.

At step S4, the macro base station sends this delay information back to the small cell base station.

At step S5, the small cell base station determines that the delay information is such that there is a risk that future E-DCH grants may arrive too late to be applicable to the user equipment.

At step S6, the small cell base station sends another E-DCH serving grant budget together with a flag indicating that the macro base station should enter a mode whereby it reissues the last-received E-DCH grant for the user equipment. The small cell base station also indicates the periodicity (Tα) or interval with which it requires the macro base station to reissue E-DCH grants to the user equipment.

At step S7, the macro base station then reissues the last E-DCH grant received from the small cell base station to the user equipment every Tα.

At step S8, which is a later point in time, the small cell base station sends a new E-DCH grant budget to the macro base station.

At step S9, the macro base station receives this new E-DCH grant budget and replaces the currently stored E-DCH grant budget that it has for the user equipment with this new E-DCH grant budget.

At step S10, when Tα expires, the macro base station sends the new E-DCH grant to the user equipment.

Accordingly, embodiments provide a technique which enables uplink-downlink coupling to be controlled by a small cell and macro base station within a HetNet when the decoupling function requires that the small cell needs to send E-DCH grants to user equipment via the macro network and this introduces a delay in sending this information from the small cell base station to the user equipment via the macro network. Embodiments mitigate the issues caused by this inherent network delay.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Abase station method, comprising:
receiving at least one resource control message from a small cell base station to control uplink resources used by a user equipment for uplink transmissions with a small cell supported by said small cell base station;
determining a time delay experienced between said resource control message being sent by said small cell base station and being received by said base station; and
transmitting an indication of said time delay to said small cell base station.

2. The method of claim 1, wherein said step of determining comprises determining said time delay from a plurality of said resource control messages.

3. The method of claim 1 or 2, wherein said step of determining comprises determining at least one of an average time delay, a minimum time delay and a maximum time delay from said plurality of said resource control messages and said step of transmitting comprises transmitting an indication at least one of said average time delay, said minimum time delay and said maximum time delay to said small cell base station.

4. The method of any preceding claim, wherein said step of determining comprises determining said time delay from a time stamp associated with each resource control message.

5. The method of any preceding claim comprising the steps of:
receiving resource control information associated with said user equipment from said small cell base station;
utilising said resource control information to determine allocated uplink resources to be used by said user equipment for uplink transmissions with said small cell; and
transmitting an indication of said allocated uplink resources to said user equipment.

6. The method of any preceding claim, wherein said resource control information comprises an indication of small cell base station resource availability, user equipment characteristics and an interval between transmissions of said indication of said allocated uplink resources and said step of transmitting comprises transmitting said indication of said allocated uplink resources to said user equipment in accordance with said interval.

7. The method of any preceding claim, comprising the steps of:
receiving resource control information associated with each of a plurality of user equipment;
utilising said resource control information to determine allocated uplink resources to be used by each said user equipment for uplink transmissions with said small cell; and
transmitting an indication of said allocated uplink resources to each user equipment.

8. The method of any preceding claim, wherein said resource control information comprises, for each user equipment, at least one of an indication of relative apportionment of uplink resources and an interval between transmissions of said indication of said allocated uplink resources.

9. The method of any preceding claim, comprising the steps of:
receiving resource control information associated with a group of user equipment;
utilising said resource control information to determine allocated uplink resources to be used by said group of user equipment for uplink transmissions with said small cell; and
transmitting an indication of said allocated uplink resources to each of said group of user equipment.

10. The method of any preceding claim, wherein said resource control information comprises at least one of an indication of allocated uplink resources for each user equipment and an indication of a time interval between transmissions of said indication of said allocated uplink resources and said method comprises transmitting said indication of said allocated uplink resources to said user equipment in accordance with said interval.

11. The method of any preceding claim, wherein said resource control information comprises at least one of an indication of a change in allocated uplink resources for each user equipment and an indication of a change in time interval between transmissions of said indication of said allocated uplink resources and said method comprises transmitting said indication of said allocated uplink resources to said user equipment in accordance with said interval.

12. Abase station, comprising:
reception logic operable to receive at least one resource control message from a small cell base station to control uplink resources used by a user equipment for uplink transmissions with a small cell supported by said small cell base station;
determining logic operable to determine a time delay experienced between said resource control message being sent by said small cell base station and being received by said base station; and
transmission logic operable to transmit an indication of said time delay to said small cell base station.

13. A small cell base station method, comprising:
transmitting at least one resource control message to a base station to control uplink resources used by a user equipment for uplink transmissions with a small cell supported by said small cell base station; and
receiving an indication of a time delay experienced between said resource control message being sent by said small cell base station and being received by said base station.

14. A small cell base station, comprising:
transmission logic operable to transmit at least one resource control message to a base station to control uplink resources used by a user equipment for uplink transmissions with a small cell supported by said small cell base station; and
reception logic operable to receive an indication of a time delay experienced between said resource control message being sent by said small cell base station and being received by said base station.

15. A computer program product operable, when executed on a computer, to perform the method steps of any one of claims 1 to 11 and 13.

## Amended claims

### Amended claims in accordance with Rule 137(2) EPC.

1. A base station (BTS) method, comprising:
receiving (2) at least one resource control message from a small cell base station to control uplink resources used by a user equipment (UE) for uplink transmissions with a small cell supported by said small cell base station;
determining (3) a time delay experienced between said resource control message being sent by said small cell base station and being received by said base station; and
transmitting (4) an indication of said time delay to said small cell base station.

2. The method of claim 1, wherein said step of determining comprises determining said time delay from a plurality of said resource control messages.

3. The method of claim 1 or 2, wherein said step of determining comprises determining at least one of an average time delay, a minimum time delay and a maximum time delay from said plurality of said resource control messages and said step of transmitting comprises transmitting an indication at least one of said average time delay, said minimum time delay and said maximum time delay to said small cell base station.

4. The method of any preceding claim, wherein said step of determining comprises determining said time delay from a time stamp associated with each resource control message.

5. The method of any preceding claim comprising the steps of:
receiving resource control information associated with said user equipment from said small cell base station;
utilising said resource control information to determine allocated uplink resources to be used by said user equipment for uplink transmissions with said small cell; and
transmitting (7) an indication of said allocated uplink resources to said user equipment.

6. The method of any preceding claim, wherein said resource control information comprises an indication of small cell base station resource availability, user equipment characteristics and an interval between transmissions of said indication of said indication of said allocated uplink resources to said user equipment in accordance with said interval

7. The method of any preceding claim, comprising the steps of:
receiving resource control information associated with each of a plurality of user equipment;
utilising said resource control information to determine allocated uplink resources to be used by each said user equipment for uplink transmissions with said small cell; and
transmitting an indication of said allocated uplink resources to each user equipment.

8. The method of any preceding claim, wherein said resource control information comprises, for each user equipment, at least one of an indication of relative apportionment of uplink resources and an interval between transmissions of said indication of said allocated uplink resources.

9. The method of any preceding claim, comprising the steps of:
receiving resource control information associated with a group of user equipment;
utilising said resource control information to determine allocated uplink resources to be used by said group of user equipment for uplink transmissions with said small cell; and
transmitting an indication of said allocated uplink resources to each of said group of user equipment.

10. The method of any preceding claim, wherein said resource control information comprises at least one of an indication of allocated uplink resources for each user equipment and an indication of a time interval between transmissions of said indication of said allocated uplink resources and said method comprises transmitting said indication of said allocated uplink resources to said user equipment in accordance with said interval.

11. The method of any preceding claim, wherein said resource control information comprises at least one of an indication of a change in allocated uplink resources for each user equipment and an indication of a change in time interval between transmissions of said indication of said allocated uplink resources and said method comprises transmitting said indication of said allocated uplink resources to said user equipment in accordance with said interval.

12. A base station (BTS), comprising:
reception logic operable to receive at least one resource control message from a small cell base station to control uplink resources used by a user equipment (UE) for uplink transmissions with a small cell supported by said small cell base station;
determining logic operable to determine a time delay experienced between said resource control message being sent by said small cell base station and being received by said base station; and
transmission logic operable to transmit an indication of said time delay to said small cell base station.

13. A small cell base station method, comprising:
transmitting at least one resource control message to a base station (BTS) to control uplink resources used by a user equipment (UE) for uplink transmissions with a small cell supported by said small cell base station; and
receiving an indication of a time delay experienced between said resource control message being sent by said small cell base station and being received by said base station.

14. A small cell base station, comprising:
transmission logic operable to transmit at least one resource control message to a base station (BTS) to control uplink resources used by a user equipment (UE) for uplink transmissions with a small cell supported by said small cell base station; and
reception logic operable to receive an indication of a time delay experienced between said resource control message being sent by said small cell base station and being received by said base station.

15. A computer program product operable, when executed on a computer, to perform the method steps of any one of claims 1 to 11 and 13.
